(19) Europäisches Patentamt
European Patent Office
Office européen des brevets

(11) **EP 4 428 779 A1**

(12) **EUROPEAN PATENT APPLICATION**
published in accordance with Art. 153(4) EPC

(43) Date of publication:
**11.09.2024 Bulletin 2024/37**

(21) Application number: **22888934.1**

(22) Date of filing: **11.08.2022**

(51) International Patent Classification (IPC):
**G06Q 10/06** (2023.01)     **G06Q 10/00** (2023.01)
**G06F 17/18** (2006.01)

(52) Cooperative Patent Classification (CPC):
Y02P 90/84; Y02P 90/845; Y02W 90/00

(86) International application number:
**PCT/CN2022/111810**

(87) International publication number:
**WO 2023/077899 (11.05.2023 Gazette 2023/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.11.2021 CN 202111307965**

(71) Applicants:
• **Guangdong Brunp Recycling Technology Co., Ltd.**
**Foshan, Guangdong 528137 (CN)**
• **Hunan Brunp Recycling Technology Co., Ltd.**
**Changsha, Hunan 410600 (CN)**
• **Hunan Brunp EV Recycling Co., Ltd.**
**Changsha, Hunan 410600 (CN)**

(72) Inventors:
• **LI, Aixia**
**Foshan, Guangdong 528137 (CN)**
• **YU, Haijun**
**Foshan, Guangdong 528137 (CN)**
• **WU, Benben**
**Foshan, Guangdong 528137 (CN)**
• **XIE, Yinghao**
**Foshan, Guangdong 528137 (CN)**
• **ZHANG, Xuemei**
**Foshan, Guangdong 528137 (CN)**
• **LI, Changdong**
**Foshan, Guangdong 528137 (CN)**

(74) Representative: **Germain Maureau**
**12, rue Boileau**
**69006 Lyon (FR)**

(54) **CARBON EMISSION ACCOUNTING METHOD, APPARATUS AND SYSTEM FOR WASTE BATTERY RECYCLING**

(57) The present disclosure discloses a carbon emission accounting method, device, and system for recycling of waste battery. The device includes a data acquisition unit and an averaging unit. The system includes a plurality of acquisition and transmission modules and a calculation processing module. By acquiring periodically a plurality of sets of carbon emission data in a cycle and calculating an average carbon emission corresponding to data acquired periodically in the cycle according to a preset carbon emission calculation formula set and the plurality of sets of carbon emission data, the carbon emission accounting method, device, and system for recycling of waste battery provide accurate data support for carbon trading and carbon emission amount monitoring of enterprises for recycling of waste battery, thereby improving the manageability of enterprise carbon emissions. Further, by generating an analysis report according to the average carbon emission and sending the analysis report to a user, the carbon emission accounting method, device, and system for recycling of waste battery disclosed in the present disclosure improve the visualization and interactivity of carbon emission calculation.

```
┌─────────────────────────────────────────────────┐
│ Periodically acquire a plurality of sets of      │── S1
│ carbon emission data in a cycle within a preset  │
│ system boundary range on a production line at    │
│ preset acquisition intervals                     │
└─────────────────────────────────────────────────┘
                        │
                        ▼
┌─────────────────────────────────────────────────┐
│ Calculate an average carbon emission in the      │── S2
│ cycle according to a preset carbon emission       │
│ calculation formula set and the plurality of     │
│ sets of carbon emission data                     │
└─────────────────────────────────────────────────┘
```

**FIG. 3**

**Description**

**TECHNICAL FIELD**

The present disclosure belongs to the field of carbon emission accounting for recycling of waste battery, and relates to a carbon emission accounting method, device, and system for recycling of waste battery.

**BACKGROUND**

Global warming and climate change are issues related to the destiny of all mankind, and many measures have been taken in the international community to deal with the issues. With the widespread popularization of new energy vehicles, decommissioned batteries will grow explosively in the next few years. Recycling of battery, especially the recycling of traction batteries for new energy vehicle, is not only a task of recycling resource, but also one of the important means for energy conservation and environmental protection, control of carbon emissions, and promotion of early carbon peaking.

In the existing technologies, a pre-treatment process for recycling of waste battery usually includes a pyrolysis process and a dry shredding and sorting process, where the pyrolysis process is used to treat battery scraps with electrolytic solution, and the dry shredding and sorting process is used to treat battery cells without the electrolytic solution (or battery scraps with a small amount of the electrolytic solution). Since pyrolysis involves high-temperature decomposition with large energy consumption during a production process and results in a large amount of carbon emissions, it is a process that enterprises for recycling waste batteries focus on in terms of carbon emissions.

However, the existing techniques still cannot account a carbon emission during a pyrolysis treatment process for recycling of waste battery, which makes it difficult for enterprises to evaluate and control carbon emissions.

Therefore, there is currently a need for method, device, and system for accounting a carbon emission from recycling of waste battery, so as to overcome the above-mentioned shortcomings in the existing technologies.

**SUMMARY**

In view of the above-mentioned technical problems in the art, the present disclosure is intended to provide a carbon emission accounting method, device, and system for recycling of waste battery, which provides accurate data support for carbon trading and carbon emission monitoring of enterprises for recycling waste batteries, thereby improving the manageability of carbon emissions for enterprises.

The present disclosure provides a carbon emission accounting device for recycling of waste battery, including a data acquisition unit and an averaging unit, where the data acquisition unit is configured to acquire periodically in a cycle, a plurality of sets of carbon emission data within a preset system boundary range on a production line at preset acquisition intervals; and the averaging unit is configured to calculate an average carbon emission in the cycle according to a preset carbon emission calculation formula set and the plurality of sets of carbon emission data.

In an embodiment, the device further includes an instruction receiving unit configured to receive an acquisition instruction sent by a user; and the acquisition instruction includes an acquisition interval, a cycle length, and a system boundary range.

In an embodiment, the device further includes an interactive analysis unit configured to generate an analysis report according to the average carbon emission and send the analysis report to the user.

The present disclosure provides a carbon emission accounting method for recycling of waste battery executed by the carbon emission accounting device for recycling of waste battery described above, including: acquiring periodically in a cycle, a plurality of sets of carbon emission data within a preset system boundary range on a production line at preset acquisition intervals; and calculating an average carbon emission in the cycle according to a preset carbon emission calculation formula set and the plurality of sets of carbon emission data.

In an embodiment, the method further includes: receiving an acquisition instruction sent by a user, where the acquisition instruction includes an acquisition interval, a cycle length, and a system boundary range.

In an embodiment, the method further includes: generating an analysis report according to the average carbon emission and sending the analysis report to the user.

In an embodiment, calculating the average carbon emission in the cycle according to the preset carbon emission calculation formula set and the plurality of sets of carbon emission data includes: according to a carbon emission calculation formula and each of the plurality of sets of carbon emission data, calculating a respective one of a plurality of first carbon emissions corresponding to each of the plurality of sets of carbon emission data, where the preset carbon emission calculation formula set includes the carbon emission calculation formula and an averaging formula; and calculating an average value of the plurality of first carbon emissions by using the averaging formula, and taking the average value as the average carbon emission in the cycle corresponding to the plurality of sets of carbon emission data.

The present disclosure further provides a carbon emission accounting system for recycling of waste battery, including a plurality of acquisition and transmission modules and a calculation processing module, each of the plurality of acquisition and transmission modules is in communication connection with the calculation processing module, where each of the plurality of acquisition and transmission modules is arranged on a respective one of a plurality of nodes to be tested on a production line, and each of the plurality of acquisition and transmission modules is configured to acquire a plurality of sets of carbon emission data of the respective node to be tested and transmit the plurality of sets of carbon emission data to the calculation processing module; and the calculation processing module is configured to execute the carbon emission accounting method for recycling of waste battery described above based on the plurality of sets of carbon emission data to realize carbon emission calculation.

In an embodiment, the system further includes a user interaction module, and the user interaction module includes a touchable/non-touchable display screen, an input keyboard, a virtual keyboard, an indicator light, a loudspeaker, a microphone, or a combination of at least one thereof.

Compared with the existing technologies, the embodiments of the present disclosure have the following beneficial effects.

The present disclosure provides a method, device, and system for accounting carbon emission from recycling of waste battery. By repeatedly acquiring a set of carbon emission data in a cycle and calculating an average carbon emission corresponding to data acquired repeatedly in the cycle according to a preset carbon emission calculation formula set and multiple sets of carbon emission data. The method, device, and system provide accurate data support for carbon trading and carbon emission monitoring of enterprises for recycling waste batteries, thereby improving the manageability of carbon emissions for enterprises.

Further, by generating an analysis report according to the average carbon emission and sending the analysis report to a user, the method, device, and system for accounting carbon emission from recycling of waste battery provided in the present disclosure improve the visualization and interactivity of carbon emission calculation.

## BRIEF DESCRIPTION OF DRAWINGS

Hereinafter, the present disclosure will be further described below in conjunction with the accompanying drawings of the specification.

FIG. 1 is a structure diagram of an embodiment of the carbon emission accounting device for recycling of waste battery according to the present disclosure;

FIG. 2 is a flow chart of the principle of a pyrolysis process;

FIG. 3 is a flow chart of an embodiment of the carbon emission accounting method for recycling of waste battery according to the present disclosure;

FIG. 4 is a flow chart of another embodiment of the carbon emission accounting method for recycling of waste battery according to the present disclosure; and

FIG. 5 is a structure diagram of an embodiment of the carbon emission accounting system for recycling of waste battery according to the present disclosure.

## DETAILED DESCRIPTION

The technical schemes in the embodiments of the present disclosure are clearly and completely described below with reference to the accompanying drawings in the embodiments of the present disclosure. Apparently, the described embodiments are merely a part rather than all of the embodiments of the present disclosure. All other embodiments obtained by a person of ordinary skill in the art based on the embodiments of the present disclosure without creative efforts shall fall within the protection scope of the present disclosure.

**Specific Embodiment Example 1**

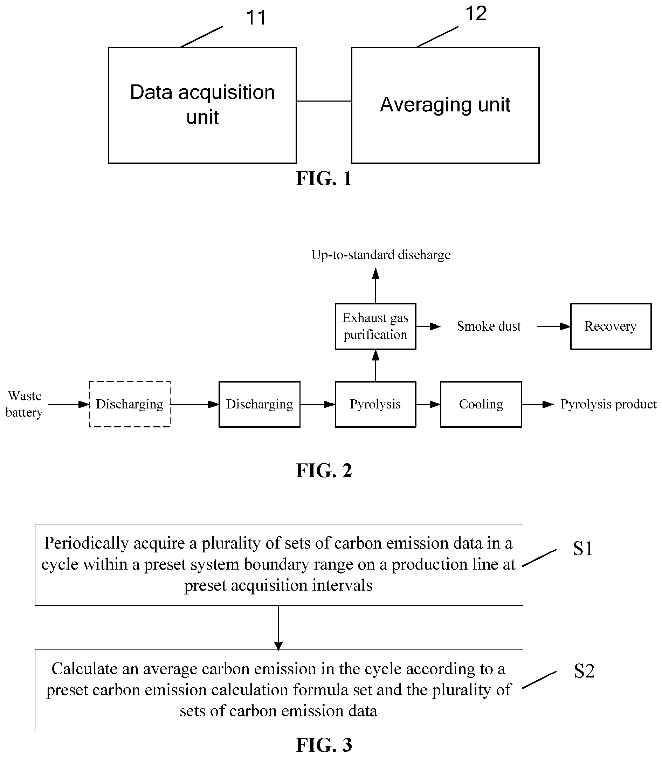

A carbon emission accounting device for recycling of waste battery is first described in an embodiment of the present disclosure. FIG. 1 is a structure diagram of an embodiment of the carbon emission accounting device for recycling of waste battery according to the present disclosure.

As shown in FIG. 1, the device includes a data acquisition unit 11 and an averaging unit 12.

The data acquisition unit 11 is configured to acquire periodically in a cycle, a plurality of sets of carbon emission data within a preset system boundary range on a production line at preset acquisition intervals.

The averaging unit 12 is configured to calculate an average carbon emission in the cycle according to a preset carbon emission calculation formula set and the carbon emission data sets. In an embodiment, the averaging unit 12 is also configured to calculate a first carbon emission corresponding to each set of carbon emission data according to a carbon emission calculation formula and each set of carbon emission data; and calculate an average value of a plurality of first carbon emissions by using the averaging formula, and take the average value as the average carbon emission in the cycle corresponding to a plurality of sets of carbon emission data. The preset carbon emission calculation formula set includes the carbon emission calculation formula and an averaging formula.

When it needs to calculate a carbon emission generated from recycling of waste battery, the data acquisition unit 11 is first utilized to acquire periodically in a cycle, a plurality of sets of carbon emission data within a preset system boundary range on a production line at preset acquisition intervals; and then the averaging unit 12 is utilized to calculate an average carbon emission in the cycle according to a preset carbon emission calculation formula set and the sets of carbon emission data.

In an embodiment, the device further includes an instruction receiving unit configured to receive an acquisition instruction sent by a user. The acquisition instruction includes an acquisition interval, a cycle length, and a system boundary range.

In an embodiment, the device further include an interactive analysis unit configured to generate an analysis report according to the average carbon emission and send the analysis report to the user.

A carbon emission accounting device for recycling of waste battery is described in the embodiment of the present disclosure. By repeatedly acquiring a carbon emission data set in a cycle and calculating an average carbon emission corresponding to data acquired repeatedly in the cycle according to a preset carbon emission calculation formula set and the carbon emission data sets, the device provides accurate data support for carbon trading and carbon emission monitoring of enterprises for recycling waste batteries, thereby improving the manageability of carbon emissions for enterprises. Further, by generating an analysis report according to the average carbon emission and sending the analysis report to a user, the carbon emission accounting device for recycling of waste battery described in the embodiment of the present disclosure improves the visualization and interactivity of carbon emission accounting.

**Specific Embodiment Example 2**

In addition to the device described above, a carbon emission accounting method for recycling of waste battery is described in an embodiment of the present disclosure. FIG. 2 is a flow chart of the principle of a pyrolysis process. FIG. 3 is a flow chart of an embodiment of the carbon emission accounting method for recycling of waste battery according to the present disclosure.

As shown in FIG. 3, the method includes the following steps.

At S1: A plurality of sets of carbon emission data within a preset system boundary range on a production line are acquired periodically in a cycle at preset acquisition intervals.

In the existing technologies, a pre-treatment process for recycling of waste battery includes a pyrolysis process and a dry shredding and sorting process. The pyrolysis process (including conventional pyrolysis and anaerobic pyrolysis) is utilized to treat waste battery materials containing electrolytic solution, where waste battery materials resulting from preliminary separation are subjected to high-temperature decomposition to remove organic binders; and at the same time, metals and compounds thereof in the battery undergo redox decomposition or anaerobic pyrolysis (in the absence of oxygen), then volatilize in the form of vapor, and then are collected by a method such as condensation.

A process of recycling waste batteries through pyrolysis requires operations such as discharging, disassembling, shredding, pyrolysis, sorting, cooling, dust removal, and exhaust gas treatment, and thus when a carbon emission accounting is performed, some or all of the above operations should be considered to improve the evaluation completeness of the carbon emission accounting. Therefore, in an embodiment, the preset system boundary range includes discharging, disassembling, shredding, pyrolysis, sorting, cooling, dust removal, and exhaust gas treatment. On this basis, in order to improve the accuracy of a final accounting result (an average carbon emission), data acquisition is repeatedly conducted at a preset time interval for a cycle, such as to avoid a result error caused by the singularizing of raw data.

At S2: An average carbon emission in the cycle is calculated according to a preset carbon emission calculation formula set and the plurality of sets of carbon emission data.

In an embodiment, the preset carbon emission calculation formula set includes a carbon emission calculation formula and an averaging formula. In order to further improve the evaluation completeness of carbon emission calculation, when a carbon emission is calculated by the carbon emission calculation formula in an embodiment of the present disclosure, carbon emissions resulting from the electric energy, heat energy, natural gas, and production materials consumed in each of the operations of the pyrolysis process, and carbon emissions of greenhouse gases emitted during the production process are all taken into consideration.

In an embodiment, a carbon emission calculation formula is specifically as follows:

$$C_{t\ total} = C_{t\ material} + C_{t\ energy} + C_{t\ fuel} + C_{t\ emitted\ gas};$$

where $C_{t\ total}$ represents a total carbon emission at time t, which is expressed in a unit of $kgCO_2e$; $C_{t\ material}$ represents a carbon emission of all materials involved in a defined range at time t, which is expressed in a unit of $kgCO_2e$; $C_{t\ energy}$ represents a carbon emission of energy consumed in the whole process at time t within a defined range, which is expressed in a unit of $kgCO_2e$; $C_{t\ fuel}$ represents a carbon emission of fuel consumed within a defined range at time t, which is expressed in a unit of $kgCO_2e$; and $C_{t\ emitted\ gas}$ represents a carbon emission of gas emitted within a defined range at time t, which is expressed in a unit of $kgCO_2e$.

In an embodiment, a calculation formula of $C_{t\ material}$ is specifically as follows:

$$C_{t\ material} = \sum_{i=0}^{n} M_i * CE_i;$$

where $M_{ti}$ represents a consumption or output of a material i involved in the production process at time t, which is expressed in a unit of $kgCO_2e$; and $CE_i$ represents a carbon emission factor of a material i involved in the production process, which is expressed in a unit of $kgCO_2e/kg$.

In an embodiment, a calculation formula of $C_{t\ energy}$ is specifically as follows:

$$C_{t\ energy} = \sum_{k=0}^{n} E_k * CE_k;$$

where $E_{tk}$ represents a consumption of energy k involved in the production process at time t, which is expressed in a unit of $kgCO_2e$; and $CE_k$ represents a carbon emission factor of energy k involved in the production process, which is expressed in a unit of $kgCO_2e/kg$.

Specifically, the averaging formula is as follows:

$$C_{average} = \frac{\int_{t1}^{t2} C_{t\ total} dt}{t2 - t1};$$

where $C_{average}$ represents an average value of all carbon emissions from time ti to $t_2$, which is expressed in a unit of $kgCO_2e$; and $C_{t\ total}$ represents a total carbon emission at time t, which is expressed in a unit of $kgCO_2e$.

In an embodiment, this step specifically includes: according to a carbon emission calculation formula and each carbon emission data set, calculating a respective one of a plurality of first carbon emissions corresponding to each of the plurality of sets of carbon emission data, where the preset carbon emission calculation formula set includes the carbon emission calculation formula and an averaging formula; and calculating an average value of a plurality of first carbon emissions by using the averaging formula, and taking the average value as the average carbon emission in the cycle corresponding to a plurality of sets of carbon emission data.

The present disclosure provides a method for calculating a carbon emission of recycling of waste battery. By repeatedly acquiring a carbon emission data set in a cycle and calculating an average carbon emission corresponding to data acquired repeatedly in the cycle according to a preset carbon emission calculation formula set and the carbon emission data sets, the method provides accurate data support for carbon trading and carbon emission monitoring of enterprises for recycling waste batteries, thereby improving the manageability of carbon emissions for enterprises.

## Specific Embodiment Example 3

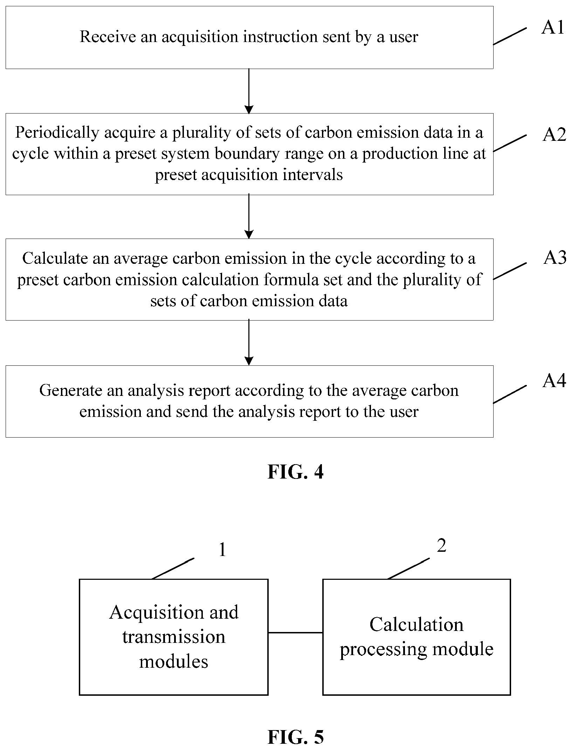

In addition to the device and method described above, another carbon emission accounting method for recycling of waste battery is described in an embodiment of the present disclosure. FIG. 4 is a flow chart of another embodiment of the carbon emission accounting method for recycling of waste battery according to the present disclosure.

As shown in FIG. 4, the method includes the following steps.

At A1: An acquisition instruction sent by a user is received.

In order to improve the interactivity and controllability of carbon emission calculation, an instruction is received and analyzed in the embodiment of the present disclosure to achieve the interaction with the user. In an embodiment, the acquisition instruction includes an acquisition interval, a cycle length, and a system boundary range.

In an embodiment, a manner in which the user sends the acquisition instruction include keyboard input, select input, handwriting input, or voice input.

At A2: A plurality of sets of carbon emission data within a preset system boundary range on a production line are acquired periodically in a cycle at a preset acquisition interval.

In the existing technologies, a pre-treatment process for recycling of waste battery includes a pyrolysis process and a dry shredding and sorting process. The pyrolysis process (including conventional pyrolysis and anaerobic pyrolysis) is used to treat battery scraps with electrolytic solution, where waste battery materials resulting from preliminary separation are subjected to high-temperature decomposition to remove organic binders; and at the same time, metals and compounds thereof in the battery undergo redox decomposition or anaerobic pyrolysis, then volatilize in the form of vapor, and then are collected by a method such as condensation.

A process of recycling waste batteries through pyrolysis requires operations such as discharging, disassembling, shredding, pyrolysis, sorting, cooling, dust removal, and exhaust gas treatment, and thus when a carbon emission is calculated, some or all of the above operations should be considered to improve the evaluation completeness of carbon emission calculation. Therefore, in an embodiment, the preset system boundary range includes discharging, disassembling, shredding, pyrolysis, sorting, cooling, dust removal, and exhaust gas treatment. On this basis, in order to improve the accuracy of a final calculation result (an average carbon emission), data acquisition is repeatedly conducted at a preset time interval for a cycle, such as to avoid a result error caused by the singularizing of raw data.

At A3: An average carbon emission in the cycle is calculated according to a preset carbon emission calculation formula set and the carbon emission data sets.

In an embodiment, the preset carbon emission calculation formula set includes a carbon emission calculation formula and an averaging formula. In order to further improve the evaluation completeness of carbon emission calculation, when a carbon emission is calculated by the carbon emission calculation formula in the embodiment of the present disclosure, carbon emissions resulting from the electric energy, heat energy, natural gas, and production materials consumed in each of the operations of the pyrolysis process, and carbon emissions of greenhouse gases emitted during the production process are all taken into consideration.

In an embodiment, a carbon emission calculation formula is specifically as follows:

$$C_{t\ total} = C_{t\ material} + C_{t\ energy} + C_{t\ fuel} + C_{t\ emitted\ gas};$$

where $C_{t\ total}$ represents a total carbon emission at time t, which is expressed in a unit of $kgCO_2e$; $C_{t\ material}$ represents a carbon emission of all materials involved in a defined range at time t, which is expressed in a unit of $kgCO_2e$; $C_{t\ energy}$ represents a carbon emission of energy consumed in the whole process at time t within a defined range, which is expressed in a unit of $kgCO_2e$; $C_{t\ fuel}$ represents a carbon emission of fuel consumed within a defined range at time t, which is expressed in a unit of $kgCO_2e$; and $C_{t\ emitted\ gas}$ represents a carbon emission of gas emitted within a defined range at time t, which is expressed in a unit of $kgCO_2e$.

In an embodiment, a calculation formula of $C_{t\ material}$ is specifically as follows:

$$C_{t\ material} = \sum_{i=0}^{n} M_i * CE_i;$$

where $M_{ti}$ represents a consumption or output of a material i involved in the production process at time t, which is expressed in a unit of $kgCO_2e$; and $CE_i$ represents a carbon emission factor of a material i involved in the production process, which is expressed in a unit of $kgCO_2e/kg$.

In an embodiment, a calculation formula of $C_{t\ energy}$ is specifically as follows:

$$C_{t\ energy} = \sum_{k=0}^{n} E_k * CE_k;$$

where $E_{tk}$ represents a consumption of energy k involved in the production process at time t, which is expressed in a unit of $kgCO_2e$; and $CE_k$ represents a carbon emission factor of energy k involved in the production process, which is expressed in a unit of $kgCO_2e/kg$.

Specifically, the averaging formula is as follows:

$$C_{average} = \frac{\int_{t1}^{t2} C_{t\ total} dt}{t2 - t1};$$

where $C_{average}$ represents an average value of all carbon emissions from time ti to $t_2$, which is expressed in a unit of kgCO$_2$e; and $C_{t\ total}$ represents a total carbon emission at time t, which is expressed in a unit of kgCO$_2$e.

In an embodiment, this step is specifically as follows: calculating a first carbon emission corresponding to each carbon emission data set according to a carbon emission calculation formula and each carbon emission data set; and calculating an average value of a plurality of first carbon emissions by using the averaging formula, and taking the average value as the average carbon emission in the cycle corresponding to a plurality of sets of carbon emission data. The preset carbon emission calculation formula set includes the carbon emission calculation formula and an averaging formula.

At A4: An analysis report is generated according to the average carbon emission and then sent to the user.

In order to make a calculation result intuitive and visible, an analysis report is generated according to the average carbon emission and then sent to the user in the embodiment of the present disclosure. In an embodiment, a form of the analysis report includes text information, image information, or voice information, and a combination of one or more thereof.

A carbon emission accounting method for recycling of waste battery is described in the embodiment of the present disclosure. By repeatedly acquiring a carbon emission data set in a cycle and calculating an average carbon emission corresponding to data acquired repeatedly in the cycle according to a preset carbon emission calculation formula set and the carbon emission data sets, the method provides accurate data support for carbon trading and carbon emission monitoring of enterprises for recycling waste batteries, thereby improving the manageability of carbon emissions for enterprises. Further, by generating an analysis report according to the average carbon emission and sending the analysis report to a user, the carbon emission accounting method for recycling of waste battery described in the embodiment of the present disclosure improves the visualization and interactivity of carbon emission accounting.

**Specific Embodiment Example 4**

In addition to the methods and device described above, a carbon emission accounting system for recycling of waste battery is described in the embodiment of the present disclosure. FIG. 5 is a structure diagram of an embodiment of the system for calculating a carbon emission of recycling of waste battery according to the present disclosure.

As shown in the figure, the system includes a plurality of acquisition and transmission modules 1 and a calculation processing module 2 that are in communication connection.

The acquisition and transmission module 1 is arranged on each node to be tested on a production line, and the acquisition and transmission module is configured to acquire a carbon emission data set(s) of each node to be tested and transmit the carbon emission data set(s) to the calculation processing module.

The calculation processing module 2 is configured to execute the carbon emission accounting method for recycling of waste battery described above based on the carbon emission data set(s) to realize carbon emission calculation.

In an embodiment, the system further includes a user interaction module, and the user interaction module includes a touchable/non-touchable display screen, an input keyboard, a virtual keyboard, an indicator light, a loudspeaker, or a microphone, and a combination of one or more thereof.

A carbon emission accounting system for recycling of waste battery is described in the embodiment of the present disclosure. By repeatedly acquiring a carbon emission data set in a cycle and calculating an average carbon emission corresponding to data acquired repeatedly in the cycle according to a preset carbon emission calculation formula set and the carbon emission data sets, the system provides accurate data support for carbon trading and carbon emission monitoring of enterprises for recycling waste batteries, thereby improving the manageability of carbon emissions for enterprises. Further, by generating an analysis report according to the average carbon emission and sending the analysis report to a user, the carbon emission accounting system for recycling of waste battery described in the embodiment of the present disclosure improves the visualization and interactivity of carbon emission calculation.

The objectives, technical schemes, and beneficial effects of the present disclosure are further described in detail through the above specific embodiments. It should be understood that the above are merely some specific embodiments of the present disclosure, but are not intended to limit the protection scope of the present disclosure. It should be particularly noted that, any modifications, equivalent substitutions, improvements, and the like made by a person having ordinary skills in the art within the gist and principle of the present disclosure should be included within the protection scope of the present disclosure.

**Claims**

1. A carbon emission accounting device for recycling of waste battery, comprising a data acquisition unit and an averaging unit, wherein

   the data acquisition unit is configured to acquire periodically in a cycle, a plurality of sets of carbon emission data within a preset system boundary range on a production line at preset acquisition intervals, with each of the plurality of sets of carbon emission data acquired at a respective one of the preset acquisition intervals; and
   the averaging unit is configured to calculate an average carbon emission in the cycle according to a preset carbon emission calculation formula set and the plurality of sets of carbon emission data.

2. The carbon emission accounting device for recycling of waste battery according to claim 1, further comprising an instruction receiving unit configured to receive an acquisition instruction sent by a user, wherein the acquisition instruction comprises an acquisition interval, a cycle length, and a system boundary range.

3. The carbon emission accounting device for recycling of waste battery according to claim 1 or 2, further comprising an interactive analysis unit configured to generate an analysis report according to the average carbon emission and send the analysis report to the user.

4. A carbon emission accounting method for recycling of waste battery executed by the carbon emission accounting device for recycling of waste battery according to any one of claims 1 to 3, comprising:

   acquiring periodically in a cycle, a plurality of sets of carbon emission data within a preset system boundary range on a production line at preset acquisition intervals, with each of the plurality of sets of carbon emission data acquired at a respective one of the preset acquisition intervals; and
   calculating an average carbon emission in the cycle according to a preset carbon emission calculation formula set and the plurality of sets of carbon emission data.

5. The carbon emission accounting method for recycling of waste battery according to claim 4, further comprising: receiving an acquisition instruction sent by a user, wherein the acquisition instruction comprises an acquisition interval, a cycle length, and a system boundary range.

6. The carbon emission accounting method for recycling of waste battery according to claim 5, further comprising: generating an analysis report according to the average carbon emission and sending the analysis report to the user.

7. The carbon emission accounting method for recycling of waste battery according to any one of claims 4 to 6, wherein calculating the average carbon emission in the cycle according to the preset carbon emission calculation formula set and the plurality of sets of carbon emission data comprises:

   according to a carbon emission calculation formula and each of the plurality of sets of carbon emission data, calculating a respective one of a plurality of first carbon emissions corresponding to each of the plurality of sets of carbon emission data, wherein the preset carbon emission calculation formula set comprises the carbon emission calculation formula and an averaging formula; and
   calculating an average value of the plurality of first carbon emissions by the averaging formula, and taking the average value as the average carbon emission in the cycle corresponding to the plurality of sets of carbon emission data.

8. A carbon emission accounting system for recycling of waste battery, comprising a plurality of acquisition and transmission modules and a calculation processing module that are in communication connection, wherein

   each of the plurality of acquisition and transmission modules is arranged on a respective one of a plurality of nodes to be tested on a production line, and each of the plurality of acquisition and transmission modules is configured to acquire a plurality of sets of carbon emission data of the node to be tested and transmit the plurality of sets of carbon emission data to the calculation processing module; and
   the calculation processing module is configured to execute the carbon emission accounting method for recycling of waste battery according to any one of claims 4 to 7 based on the plurality of sets of carbon emission data to realize carbon emission accounting.

9. The carbon emission accounting system for recycling of waste battery according to claim 8, further comprising a user interaction module, wherein the user interaction module comprises a touchable/non-touchable display screen, an input keyboard, a virtual keyboard, an indicator light, a loudspeaker, a microphone, or a combination thereof.

11

12

```
Data acquisition
     unit
```

```
Averaging unit
```

**FIG. 1**

Up-to-standard discharge

```
Exhaust gas
purification
```
→ Smoke dust → ```Recovery```

Waste battery → ```Discharging``` → ```Discharging``` → ```Pyrolysis``` → ```Cooling``` → Pyrolysis product

**FIG. 2**

Periodically acquire a plurality of sets of carbon emission data in a cycle within a preset system boundary range on a production line at preset acquisition intervals — S1

Calculate an average carbon emission in the cycle according to a preset carbon emission calculation formula set and the plurality of sets of carbon emission data — S2

**FIG. 3**

| Receive an acquisition instruction sent by a user | A1 |

↓

| Periodically acquire a plurality of sets of carbon emission data in a cycle within a preset system boundary range on a production line at preset acquisition intervals | A2 |

↓

| Calculate an average carbon emission in the cycle according to a preset carbon emission calculation formula set and the plurality of sets of carbon emission data | A3 |

↓

| Generate an analysis report according to the average carbon emission and send the analysis report to the user | A4 |

**FIG. 4**

1       2

| Acquisition and transmission modules | Calculation processing module |

**FIG. 5**

## INTERNATIONAL SEARCH REPORT

| International application No. |
|---|
| **PCT/CN2022/111810** |

**A.   CLASSIFICATION OF SUBJECT MATTER**

G06Q 10/06(2012.01)i;   G06Q 10/00(2012.01)i;   G06F 17/18(2006.01)i

According to International Patent Classification (IPC) or to both national classification and IPC

**B.   FIELDS SEARCHED**

Minimum documentation searched (classification system followed by classification symbols)

G06Q; G06F

Documentation searched other than minimum documentation to the extent that such documents are included in the fields searched

Electronic data base consulted during the international search (name of data base and, where practicable, search terms used)

CNPAT, CNKI, WPI, EPODOC: 电池, 回收, 碳排放, 平均, 采集, 周期, 边界, 边, 界, battery, recovery, carbon, emission, average, collect+, period, boundary

**C.   DOCUMENTS CONSIDERED TO BE RELEVANT**

| Category* | Citation of document, with indication, where appropriate, of the relevant passages | Relevant to claim No. |
|---|---|---|
| PX | CN 114139877 A (GUANGDONG BRUNP RECYCLING TECHNOLOGY CO., LTD. et al.) 04 March 2022 (2022-03-04) claims 1-9 | 1-9 |
| Y | CN 109190967 A (HUADIAN ELECTRIC POWER RESEARCH INSTITUTE CO., LTD.) 11 January 2019 (2019-01-11) description, paragraphs [0048]-[0105] | 1-9 |
| Y | CN 108281730 A (ZHEJIANG FOREVER NEW ENERGY TECHNOLOGY CO., LTD. et al.) 13 July 2018 (2018-07-13) description, paragraphs [0025]-[0058] | 1-9 |
| A | CN 105260836 A (TIANJIN UNIVERSITY) 20 January 2016 (2016-01-20) entire document | 1-9 |
| A | CN 108717599 A (CISDI CHONGQING ENVIRONMENTAL CONSULTING CO., LTD.) 30 October 2018 (2018-10-30) entire document | 1-9 |
| A | US 2012116792 A1 (LEE, JI YOUNG et al.) 10 May 2012 (2012-05-10) entire document | 1-9 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 September 2022** | **08 November 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/111810**

| Patent document cited in search report | | | Publication date (day/month/year) | Patent family member(s) | | | Publication date (day/month/year) |
|---|---|---|---|---|---|---|---|
| CN | 114139877 | A | 04 March 2022 | None | | | |
| CN | 109190967 | A | 11 January 2019 | None | | | |
| CN | 108281730 | A | 13 July 2018 | None | | | |
| CN | 105260836 | A | 20 January 2016 | None | | | |
| CN | 108717599 | A | 30 October 2018 | None | | | |
| US | 2012116792 | A1 | 10 May 2012 | WO | 2011008033 | A2 | 20 January 2011 |
| | | | | KR | 20110006903 | A | 21 January 2011 |

Form PCT/ISA/210 (patent family annex) (January 2015)